(19) Europäisches Patentamt
European Patent Office
Office européen des brevets

(11) Veröffentlichungsnummer: **0 024 009**
**B1**

(12) **EUROPÄISCHE PATENTSCHRIFT**

(45) Veröffentlichungstag der Patentschrift: **28.07.82**

(51) Int. Cl.³: **B 01 F 17/00,** B 01 D 19/04, C 04 B 13/24

(21) Anmeldenummer: **80104461.1**

(22) Anmeldetag: **29.07.80**

(54) **Emulgatorsystem und seine Verwendung als Entschäumungs- und Schaumverhütungsmittel.**

(30) Priorität: **11.08.79 DE 2932687**

(43) Veröffentlichungstag der Anmeldung: **18.02.81 Patentblatt 81/7**

(45) Bekanntmachung des Hinweises auf die Patenterteilung: **28.07.82 Patentblatt 82/30**

(84) Benannte Vertragsstaaten: **AT BE CH DE FR GB IT LI NL SE**

(56) Entgegenhaltungen:
**DE-A-2 528 212**
**DE-B-1 495 748**
**US-A-4 115 336**

(73) Patentinhaber: **BAYER AG, Zentralbereich Patente, Marken und Lizenzen, D-5090 Leverkusen 1, Bayerwerk (DE)**

(72) Erfinder: **Zabrocki, Karl, Dr., Edelfalter 33, D-4044 Büttgen (DE)**
Erfinder: **Schaupp, Kurt, Dr., Leopold-Gmelin-Strasse 64, D-5000 Köln 80 (DE)**

**EP 0 024 009 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Emulgatorsystem und seine Verwendung als Entschäumungs- und Schaumverhütungsmittel

Die Erfindung betrifft ein Emulgatorsystem, das in wässrigen Entschäumungs- und Schaumverhütungsmitteln zusammen mit anderen Stoffen, insbesondere Phosphorsäureestern, verwendet werden kann.

Die Verwendung von Phosphorsäureestern als Emulgier- und/oder Dispergiermittel für verschiedene Einsatzgebiete ist bekannt (Ullmann, 4. Auflage, Band 10, 456 [1975]). Sie können beispielsweise in Färbeflotten, Bauwerkstoffen, Emulsionspolymerisationen und Flotationen eingesetzt werden.

Da sich Phosphorsäureester mit Wasser nicht mischen, bilden sich bei ihrer Verwendung in wässrigem Medium sehr leicht mehrere Phasen aus. Dies bewirkt bei der Anwendung erhebliche Nachteile. Beispielsweise können Phosphorsäureester nicht in Kombination mit wässrigen Systemen gelagert oder dosiert werden.

Es wurden Emulgatorsysteme gefunden, die einen nichtionischen Emulgator mit einem HLB-Wert von 10 bis 20 und ein polyethermodifiziertes Polyester-Emulgatorharz, das 5 bis 50 Gew.-% bezogen auf das Emulgatorharz, Polyalkylenglykolreste enthalten.

Die erfindungsgemässen Emulgatorsysteme bilden mit in Wasser nicht mischbaren Entschäumungs- und/oder Schaumverhütungsmitteln, insbesondere mit Phosphorsäureestern, stabile wässrige Emulsionen, die sich auch bei längerer Lagerung nicht verändern.

Vorteilhafterweise können die erfindungsgemässen Emulgatorsysteme mit einer Vielzahl wässriger Anwendungsformen gemischt werden, ohne dass ein Brechen der Emulsion erfolgt und ohne, dass der Entschäumer oder die Wirksubstanz des Mischungspartners desaktiviert wird.

Nichtionische Emulgatoren für die erfindungsgemässen Emulgatorsysteme haben in der Regel einen HLB-Wert von 10 bis 20, vorzugsweise von 13 bis 17. Unter dem HLB-Wert (Hydrophilic-Lipophilic-Balance) versteht man eine dimensionslose Zahl zwischen 0 und 20, die Angaben über die Wasser- und Öllöslichkeit macht (Ullmann, 4. Auflage, Band 10, 462 [1975]).

Die nichtionischen Emulgatoren für die erfindungsgemässen Emulgatorsysteme sind allgemein bekannt (Ullmann, 4. Auflage, Band 10, 456 [1975]).

Für die erfindungsgemässen Emulgatorsysteme werden als nichtionische Emulgatoren Verbindungen der Formel

$$R^1\text{-}(OCH_2\text{-}CH_2)_n\text{-}OH \qquad (I)$$

worin
$R^1$ einen Alkylrest mit 12 bis 20 Kohlenstoffatomen oder den Rest

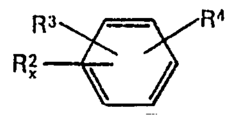

bedeutet, worin
$R^2$ einen Alyklrest mit 4 bis 20 Kohlenstoffatomen oder den Rest

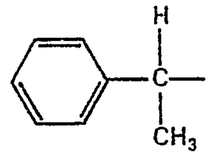

bedeutet,
$R^3$ Wasserstoff, Hydroxy, Methyl oder Phenyl bedeutet,
$R^4$ Wasserstoff oder $C_1$–$C_{10}$-Alkyl bedeutet und
n eine ganze Zahl von 4 bis 40 ist,
x eine Zahl zwischen 2,0 und 3,5 ist
darstellt, bevorzugt.

Alkylreste mit 12 bis 20 Kohlenstoffatomen ($R^1$) können geradkettige oder verzweigte gegebenenfalls mit ein oder zwei Doppelbindungen Kohlenwasserstoffreste sein. Bevorzugt sind Alkylreste mit 12 bis 18 Kohlenstoffatomen. Beispielsweise seien die folgenden Alkylreste genannt:

$C_{12}H_{25}$, $C_{14}H_{29}$, $C_{16}H_{31}$, $C_{18}H_{35}$, $C_{18}H_{33}$, $C_{18}H_{31}$.

Alkylreste mit 4 bis 20 Kohlenstoffatomen ($R^2$) können ebenfalls geradkettige oder verzweigte Kohlenwasserstoffreste sein. Bevorzugt sind hier Alkylreste mit 7 bis 12 Kohlenstoffatomen. Beispielsweise seien die folgenden Alkylreste ($R^2$) genannt:

$C_8H_{17}$, $C_9H_{19}$, $C_{11}H_{23}$.

n ist in der Regel eine ganze Zahl von 4 bis 40, bevorzugt von 6 bis 35. n bedeutet in Verbindung mit der Formel (I) einen Mittelwert an Polyethylenoxideinheiten.

x: Vorzugsbereich 2,5 bis 3,0. x ist in der Regel eine Zahl zwischen 2,0 und 3,5, bevorzugt zwischen 2,5 und 3 (x bedeutet in Verbindung mit der Formel [I] einen Mittelwert, und gibt den mittleren Substitutionsgrad an).

Insbesondere bevorzugte nichtionische Emulgatoren der Formel (I) sind ethoxylierte aliphatische substituierte Aromaten. So erhält man erfindungsgemässe nichtionische Emulgatoren mit besonders einheitlichen Teilchengrössen bei Verwendung von ethoxyliertem p-n-Nonylphenol. Andere bevorzugte nichtionische Emulgatoren der Formel (I) erhält man durch Ethoxylierung von Anlagerungsprodukten von Styrol und seinen Derivaten an Phenole, wie dies beispielsweise in der DE-PS 1 121 814 beschrieben ist. Danach werden Styrol, α-Methylstyrol oder Vinyltoluol an Phenol, Kresole oder Xylole angelagert und die

erhaltenen Reaktionsprodukte ethoxiliert.

Beispielsweise seien die folgenden nichtionischen Emulgatoren für die erfindungsgemässen Emulgatorsysteme genannt:

1 Mol Nonylphenol + 7 Mol Ethylenoxid
1 Mol Nonylphenol + 10 Mol Ethylenoxid
1 Mol Nonylphenol + 20 Mol Ethylenoxid
1 Mol Nonylphenol + 30 Mol Ethylenoxid
2,8 Mol Styrol + 1 Mol Phenol + 15 Mol Ethylenoxid

Als nichtionische Emulgatoren werden ausserdem hydrolysierte Triglyceride bevorzugt. Sie können bis zu 80% hydrolysiert sein. Beispielsweise sei das Rizinusöl genannt.

Das polyethermodifizierte Polyester-Emulgatorharz der erfindungsgemässen Emulgatorsysteme besteht bevorzugt aus einem gegebenenfalls ölmodifizierten Polyesterteil und einem gegebenenfalls durch Alkoxygruppen mit 1 bis 4 Kohlenstoffatomen terminierten Polyalkylenoxidteil mit 6 bis 100, vorzugsweise 10 bis 70, Alkylenoxidresten pro Polyalkylenoxidkette, wobei der Polyalkylenoxidteil aus mehreren einzelnen Polyalkylenoxidketten besteht und die Alkylengruppe 2 bis 4, vorzugsweise 2 Kohlenstoffatome enthält.

Die polyethermodifizierten Polyester-Emulgatorharze können 0,1 bis 10 Gew.-%, bevorzugt 0,5 bis 5 Gew.-%, bezogen auf das Emulgatorharz, Urethangruppen enthalten. In einer bevorzugten Ausführungsform des erfindungsgemässen Emulgatorsystems werden die einseitig blockierten Polyalkylenoxide mit etwa äquimolaren Mengen Diisocyanat umgesetzt, so dass Polyalkylenoxide entstehen, die pro Molekül eine freie Isocyanatgruppe tragen, welche dann ihrerseits zur Anknüpfung an den Polyesterteil dienen kann.

Das mittlere Molekulargewicht der für die Herstellung der Polyester-Emulgatorharze bevorzugten Polyester kann 400 bis 4000 betragen (dampfdruckosmometrisch in Aceton bestimmt).

Die verwendeten Polyalkylenoxide können Homopolyether, aber auch Copolyether in Block- oder statistischer Verteilung sein; Homopolyethylenoxide sind besonders bevorzugte Ausgangsmaterialien für die Herstellung der Emulgatorharze.

Als Verknüpfer zwischen Polyester- und Polyalkylenoxidteil kommen alle Diisocyanate in Betracht. Besonders bevorzugt werden in der Regel die technisch leicht zugänglichen Diisoxyxanate, z.B. das 2,4- und das 2,6-Toluylen-diisocyanat sowie beliebige Gemische dieser Isomeren, das 1,6-Hexamethylendiisocyanat, das Perhydro-2,4'- und/oder -4,4'-diphenylmethan-diisocyanat und das 1-Isocyanato-3,3,5-trimethyl-5-isocyanato-methylencyclohexan.

Der hydrophobe Polyesterteil, der mit dem Polyalkylenoxidteil zum Emulgatorharz verbunden ist, kann nach bekannten Verfahren und aus an sich bekannten Ausgangsprodukten hergestellt werden, wie sie beispielsweise Römpp's Chemielexikon, Band 1, Seite 202, Franksch'e Verlagsbuchhandlung, Stuttgart, 1966, oder in The Chemistry of Organic Film Formers, Seiten 75 bis 101, John Wiley & Sons Inc., New York, 1967, beschrieben sind.

Für die Synthese der Polyester bevorzugte Alkohole sind aliphatische, cycloaliphatische und/oder aromatische Alkohole mit 1 bis 6, vorzugsweise 2 bis 4, an nicht-aromatischen Kohlenstoffatomen gebundene Hydroxygruppen und 1 bis 24 Kohlenstoffatome pro Molekül, z.B. Glykole, wie Ethylenglykol, Propylenglykol, Butandiol, Neopentyl-Glykol, Trimethylpentandiol-1,3, Hexandiole; Etheralkohole, wie Di- und Triethylenglykole; oxethylierte Bisphenole mit 2 Alkylenoxidresten pro Molekül, wie Bis(oxiethyl)-bisphenol A; perhydrierte Bisphenole, wie Dodecahydrobisphenol A; Trimethylolethan, Trimethylolpropan, Trimethylolhexan, Glycerin, Pentaerythrit, Dipentaerythrit, Dimethylolcyclohexan, Mannit und Sorbit; einwertige, kettenabbrechende Alkohole, wie Methanol, Propanol, Butanol, Cyclohexanol, 2-Ethyl-hexanol und Benzylalkohol.

Besonders bevorzugte Alkohole sind Neopentylglykol, Trimethylolpropan, Trimethylolcyclohexan und Perhydrobisphenol.

Die Polyester können bis zu 15 Gew.-%, bezogen auf den Polyester, einwertiger Alkoholreste, einkondensiert enthalten.

Für die Synthese der Polyester bevorzugte Säurekomponenten sind aliphatische, cycloaliphatische, gesättigte oder ungesättigte und/oder aromatische mehrwertige Carbonsäuren, vorzugsweise Di- und Tricarbonsäuren mit 4 bis 12 Kohlenstoffatomen pro Molekül oder deren veresterungsfähige Derivate, wie beispielsweise Anhydride oder Ester, beispielsweise Phthalsäureanhydrid, Isophthalsäure, Terephthalsäure, Tetrahydro- und Hexahydrophthalsäure-Anhydrid, Trimellitanhydrid, Pyromellitsäureanhydrid, Maleinsäureanhydrid, Fumarsäure, Adipinsäure, Glutarsäure, Bernsteinsäureanhydrid, Acelainsäure, Endomethylentetrahydrophthalsäure, und halogenierte Säuren, wie Chlorphthalsäuren und Hexachlor-endomethylentetrahydrophthalsäure.

Die Polyester können allein aus Polycarbonsäuren und Polyalkoholen aufgebaut werden. Es ist aber auch möglich, sie durch Einkondensation von Monocarbonsäuren zu modifizieren.

Für die Herstellung der Polyester bevorzugte Monocarbonsäuren sind aliphatische, cycloaliphatische, gesättigte und/oder aromatische Monocarbonsäuren mit 6 bis 35 Kohlenstoffatomen pro Molekül, wie Benzoesäure, Butylbenzoesäure, Tolylsäure, Hexahydrobenzoesäure, Abietinsäure, Milchsäure, sowie Fettsäuren, deren Mischungen und Ester, wie Leinöl, Sojaöl, Holzöl, Safloröl, Rizinusöl, Baumwollsaatöl, Erdnussöl, Tallölfettsäure, Leinölfettsäure, Sojaölfettsäure, Holzölfettsäure, Saflorölfettsäure, Rizinenfettsäure und aus natürlichen, ungesättigten Ölen oder Fettsäuren durch Konjugierung oder Isomerisierung gewonnene Produkte; bevorzugte gesättigte Fettsäuren sind beispielsweise Kokosfettsäuren, α-Ethylhexansäure, Isononansäure und lineare $C_{16}$- bis $C_{18}$-Monocarbonsäuren.

Die Herstellung der Polyester kann nach an sich bekannten Verfahren erfolgen (Methoden der organischen Chemie, [Houben-Weyl], Georg Thieme Verlag Stuttgart, 1963, Band 14/2, Seiten 1 bis 5, 21 bis 23 und 40 bis 44; C.R. Martens, Alkyd Resin Technology, Reinhold Publ. Comp. 1961, Seiten 51 bis 59). Bevorzugt werden Alkohole, Carbonsäuren bzw. ihre Derivate und gegebenenfalls Öle durch Schmelz- oder Azeotropveresterung, in einer Inertatmosphäre bei Temperaturen von 140 bis 260°C umgesetzt. Die Umsetzung kann dabei beispielsweise durch Messung der Säurezahl und der Viskosität verfolgt werden.

Die Modifizierung der Polyester mit Polyether kann entweder direkt durch Einesterung von hydroxygruppenhaltigen Polyalkylenoxideinheiten oder durch Umsetzung der fertigen Polyester mit Derivaten von Polyalkylenoxiden, beispielsweise durch Polyaddition von mit Polyisocyanaten umgesetzten Polyalkylenoxiden, sog. hydrophilen Isocyanatkomponenten erfolgen. Es ist ebenfalls möglich, den Anteil der Säuregruppen in dem polyethermodifizierten Polyester durch Halbesterbildung zu erhöhen. Der Anteil an Polyalkylenoxid-Einheiten im Emulgatorharz beträgt im allgemeinen 5 bis 50, vorzugsweise 10 bis 20 Gew.-%, bezogen auf das Emulgatorharz.

In einer bevorzugten Ausführungsform des erfindungsgemässen Emulgatorsystems enthält das Emulgatorharz in nicht-neutralisiertem Zustand Carboxylgruppen entsprechend einer Säurezahl (darunter versteht man die Menge an festem Kaliumhydroxid in mg, die zur Neutralisation der Carboxylgruppen pro g Emulgatorharz benötigt werden) von weniger als 50, vorzugsweise 15 bis 35. Das Emulgatorharz kann teilweise oder ganz neutralisiert in das erfindungsgemässe Emulgatorsystem eingesetzt werden. Bevorzugte Neutralisationsmittel sind Alkalihydroxide, wie Natrium und/oder Kaliumhydroxid, Ammoniak, primäre, sekundäre und tertiäre Amine, wie z.B. Mono-, Di- und Triethanolamin, Dimethylethanolamin, Methyldiethanolamin und Dimethylaminomethylpropanol. Es ist aber auch möglich, die Neutralisation bei der Anwendung des Emulgatorsystems in wässrigem Medium durchzuführen. In diesem Fall verwendet man als Neutralisationsmittel bevorzugt Alkalien und/oder Amine, bevorzugt Dimethyl-Ethanolamin.

Die Verfahren zur Herstellung der Emulgatorharze sind an sich bekannt (DE-OS 2 528 212 und 2 256 621).

Man erhält besonders stabile Dispersionen, wenn man ein Emulgatorharz verwendet, das dadurch hergestellt wird, dass man einen Polyester mit einem Ölgehalt von 0 bis 30 Gew.-%, einer Säurezahl von gleich oder grösser als 5 und einer Hydroxylzahl (darunter versteht man das Analoge zur Säurezahl) von 50 bis 250 als hydrophoben Teil herstellt, diesen mit den o.g. hydrophilen Isocyanatkomponenten bis zum völligen Umsatz der Isocyanatgruppe umsetzt und anschliessend den Anteil der Säuregruppen mit einem Dicarbonsäureanhydrid auf eine Säurezahl von 15 bis 35 erhöht und entweder durch direkte Zugabe eines Amins in die Harzschmelze oder durch spätere Zugabe der Harzschmelze zu einer aminhaltigen Wasserphase (gegebenenfalls bei der Anwendung) neutralisiert. Bei Zugabe der Harzschmelze zu einer aminhaltigen Wasserphase ist es bevorzugt, gleichzeitig den nichtionischen Emulgator mitzulösen, so dass man das erfindungsgemässe Emulgatorsystem in wässriger Phase vorliegen hat. Dies ist besonders vorteilhaft bei der Anwendung.

Das erfindungsgemässe Emulgatorsystem ist besonders vorteilhaft mit anderen mit Wasser nicht mischbaren Entschäumungs- und Schaumverhütungsmitteln angewandt. Als Entschäumungs- und Schaumverhütungsmittel werden beispielsweise genannt: Phosphorsäureester und Siliconöle.

Insbesondere wird das erfindungsgemässe Emulgatorsystem zusammen mit Phosphorsäureestern eingesetzt. Phosphorsäureester als Entschäumungs- und Schaumverhütungsmittel sind an sich bekannt (Ullman, 4. Auflage, Band 10, Seite 456 [1975]).

Bevorzugt seien Phosphorsäureester der Formel

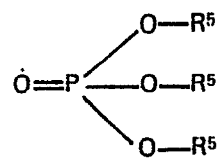

worin

$R^5$ jeweils $C_1$ bis $C_{10}$ Alkylreste bedeuten,

eingesetzt.

Beispielsweise seien die folgenden Phosphorsäureester genannt:

Tri-n-butylphosphat
Tri-isobutylphosphat
Tri-n-amylphosphat
Tri-n-isoamylphosphat

Besonders bevorzugte erfindungsgemässe Emulgatorsysteme enthalten 5 bis 30 Gew.-Teile des nichtionischen Emulgators und 10 bis 40 Gew.-Teile des polyethermodifizierten Polyester-Emulgatorharzes bezogen auf 10 Gew.-Teile des Phosphorsäureesters. Im besonderen bevorzugte Emulgatorsysteme enthalten 11 bis 18 Gew.-Teile des nichtionischen Emulgators und 15 bis 25 Gew.-Teile des polyethermodifizierten Polyester-Emulgatorharzes bezogen auf 100 Gew.-Teile des Phosphorsäureesters.

Das erfindungsgemässe Emulgatorsystem kann insbesondere in Kombination mit einem Phosphorsäureester mit Wasser in beliebigen Mengen gemischt werden. Es ist auch möglich, dass diese Mischungen bis zu 15% eines in Wasser löslichen organischen Lösungsmittels enthalten. Als in Wasser lösliche organische Lösungsmittel seien beispielsweise genannt: Methanol, Ethanol, Aceton.

Die so erhaltenen erfindungsgemässen in wässriger Phase vorliegenden Entschäumungs-und Schaumverhütungsmittel können direkt eingesetzt werden. Man kann sie herstellen, indem man beispielsweise eine Kombination des polyethermodifizierten Polyester-Emulgatorharzes mit dem Phosphorsäureester mit einer Lösung des nichtionischen Emulgators in Wasser, oder beispielsweise eine Lösung des nichtionischen Emulgators und des polyethermodifizierten Polyester-Emulgatorharzes in Wasser mit dem Phosphorsäureester vermischt. Bevorzugt verwendet man eine Lösung des nichtionischen Emulgators und des polyethermodifizierten Polyester-Emulgatorharzes in Wasser und gibt diese unter Rühren dem Phosphorsäureester bei. Zum Verrühren ist im allgemeinen ein langsam laufendes Rührwerk ausreichend.

Die erfindungsgemässen Entschäumungs- und Schaumverhütungsmittel können direkt als Zusatzmittel verwendet werden. Geeignete Einsatzgebiete sind beispielsweise Färbung und Textilveredlung, Polymerisation in wässriger Phase, Verarbeitung von Latices zu Werkstoffen und Beschichtungssystemen sowie insbesondere bevorzugt die Herstellung von Bauwerkstoffen.

Als Bauwerkstoffe seien beispielsweise genannt: Beton, Mörtel, Gips, Putze, Estrich-Materialien.

Die erfindungsgemässen Entschäumungs- und Schaumverhütungsmittel bilden vorteilhafterweise eine einheitliche Phase. Sie lassen sich unverändert lang lagern. Schwierige Dosierungsprobleme entfallen, weil alle Komponenten des erfindungsgemässen Entschäumungs- und Schaumverhütungsmittels in dem gegebenenfalls vorgegebenen Mischungsverhältnis hergestellt werden können und nicht erst während der Anwendung in verschiedenen Mengen und zu verschiedenen Zeiten dem Anwendungsgemisch zugegeben werden müssen.

Beispiele

Beispiel 1
(Herstellung des Emulgators)

a) nichtionischer Emulgator

Auf Nonylphenol gepfropftes Ethylenoxid (Molverhältnis 1:20) mit folgenden Eigenschaften:

Trübungspunkt (1%ig in Wasser) : ca. 100°C
Oberflächenspannung (0,1 g/l Waser): 44,0 dyn/cm
Netzwirkung (DIN 53 901): ca. 60 sec b. 60°C
Fp.: ca. 30°C
HLB-Wert: 16

b) Emulgatorharz

In einer 2-l-Rührbecher-Apparatur, die mit Innenthermometer, Rührer, Tropftrichter und Gaseinleitungsrohr versehen ist, werden 40 g eines auf n-Butanol gestarteten Polyethylenoxidalkohols des Molekulargewichts 2000 30 Minuten bei 120°C unter Anlegen eines Vakuums (15 Torr) entwässert. In die auf 100°C abgekühlte Schmelze werden zunächst 2 ml Benzoylchlorid eingerührt; danach fügt man 33,6 g Hexamethylendiisocyanat in einem Guss zu.

Nach 60 Minuten Reaktionszeit wird der Isocyanat-Gehalt der Mischung bestimmt. Die Isocyanat-Zahl der Mischung beträgt danach 1,8 bis 1,9% Isocyanat (ber.: 1,94%).

Nach Abkühlen der Schmelze erhält man die für weitere Umsetzungen geeignete hydrophile Isocyanatkomponente als wachsartig kristalline Substanz.

134 g Trimethylolpropan und 130,7 g Tetrahydrophthalsäureanhydrid werden bei 220°C unter Stickstoffatmosphäre bis zur Säurezahl 4 verestert. Die Viskosität der erhaltenen Vorstufe entsprach einer Auslaufzeit (gemessen als 60%ige Lösung in Dimethylformamid nach DIN 53 211, DIN-Becher 4) von 170 Sekunden.

500 g dieser Vorstufe werden im Vakuum entwässert und anschliessend mit 88,2 g der hydrophilen Isocyanatkomponente bei 100 bis 105°C miteinander umgesetzt, bis keine freien Isocyanatgruppen mehr nachweisbar sind.

580 g dieses Produktes werden mit 39 g Tetrahydrophthalsäureanhydrid bei 120°C zu einem Polyhalbester mit einer Säurezahl von ca. 27 umgesetzt.

Zu 610 g dieser Stufe gibt man unter Rühren bei 95 bis 100°C vorsichtig 26,1 g Dimethylethanolamin.

Das Harz erstarrt beim Abkühlen zu einer zähelastischen, schmelzbaren Masse.

Nichtionischer Emulgator a) und Emulgatorharz b) werden im Gewichtsverhältnis 3:4 miteinander kombiniert und zu einer etwa 45%igen wässrigen, leicht opaken Lösung guter Fliessfähigkeit und Handhabbarkeit verdünnt. Diese Lösung wird im folgenden Beispiel 2 als Emulgatorkonzentrat bezeichnet.

Beispiel 2
Herstellung einer erfindungsgemässen Emulsion

500 Gew.-Teile Tributylphosphat werden in einem geeigneten Gefäss vorgelegt und unter Rühren bei Raumtemperatur langsam 375 Gew.-Teile des ca. 45%igen Emulgatorkonzentrats zugefügt. Danach gibt man 100 g Wasser zu und verrührt zu einer homogenen Emulsion. Diese hat einen Gehalt an Phosphorsäureester von ca. 51 Gew.-%.

Beispiel 3
Wirkungsweise des erfindungsgemässen Produktes

Um die entschäumende Wirkung festzustellen, wurde eine Mischung, wie sie bei der Verlegung von Fliessestrichen aus synthetischem Anhydrit verwendet werden kann, zugrundegelegt. Als Fliessmittel wurde dabei ein zum Schäumen neigendes Polykondensat aus Ditolylethersulfosäure (bzw. deren Natriumsalz) mit Formaldehyd (= PDF) verwendet.

Es wurde wie folgt gearbeitet:

(1000 g synth. Anhydrit (= $CaSO_4$)

Grundansatz (1000 g Sand (0-3 mm)
(= GA) (280 g Wasser)

Als Zusätze wurden neben dem Fliessmittel PDF folgende Mischungen zugesetzt, die 7 Tage vor dem Einsatz hergestellt wurden:

| Mischung A | Mischung B |
|---|---|
| 75 g PDF<br>7,5 g Tributylphosphat | 75 g PDF<br>14,7 g des erfindungsgemässen Produktes aus Beispiel 1 |
| 317,5 g $H_2O$ | 310,3 g $H_2O$ |

Beide Ansätze wurden intensiv gemischt und dann jeweils in 500 cm³ Messzylinder gegeben und dort bis zum Einsatz ruhig stehengelassen.

Um die Homogenität der Probe beim Einsatz bzw. die gleichmässige Wirkung des Produktes zu testen, wurden aus jeder Mischung 2 Proben entnommen, und zwar je 1 Probe vom oberen Bereich und vom unteren. Dabei wurde darauf geachtet, dass die Flüssigkeiten bei der Probenahme nicht durchmischt wurden.

Die Ergebnisse, die in Tabelle 1 zusammengefasst sind, zeigen die grosse Verbesserung, die mit dem erfindungsgemässen Produkt, gegenüber reinem Tributylphosphat, das in der Mischung A verwendet wurde und das sich in der stehenden wässrigen Lösung vollständig an der Oberfläche abgesetzt hatte.

Beispiel 4

Es wurde ein Fliessbeton nach folgender Rezeptur hergestellt:

12 kg Portlandzement PZ 35 F
60 kg Sand + Kies (0-16 mm)
6,3 kg Wasser

Die Wassermenge stellt, auf den Zement bezogen, 52,5% dar (d.h. WZF = 0,525). Von diesem Beton, sowie weiteren gleicher Zusammensetzung, jedoch unter Zugabe von 0,3% eines Naphthalinsulfosäure (= NSF) enthaltenden Fliessmittels (Menge auf Zement bezogen) und verschiedener Mengen des erfindungsgemässen 51%igen Produktes auf Basis von Tributylphosphat laut Beispiel 1 wurde das Ausbreitmass, die Rohdichte des Frischbetons, der Luftgehalt sowie die Druckfestigkeiten nach 2 und 28 Tagen entsprechend DIN 1048, Blatt 1 (Mai 1974) bestimmt.

Die Ergebnisse sind in Tabelle 2 zusammengefasst. Aus diesen Werten ist die ausgezeichnete Wirkung des erfindungsgemässen Entschäumers zu sehen, der bei allen Proben als homogene wässrige Lösung, die auch das Fliessmittel gelöst enthielt, dem Anmachwasser zugegeben wurde.

**Tabelle 1**

| Nr. | Ansatz | Ausbreitmass in cm vor/nach 15maligem Schocken | Spurzeit** in Min. | Bemerkungen |
|---|---|---|---|---|
| 1 | GA | 12,0/16,5 | 0 | |
| 2 | GA + 7,5 g PDF | 33,5/35,0 | 35 | starker Schaum an Oberfläche |
| 3 | GA + 7,5 g PDF + 0,75 g TBP | 32,0/34,5 | 30 | kein Schaum |
| 4 | GA* + 40 g Mischung A (Probe von unten) | 33,0/35,0 | 35 | starker Schaum |
| 5 | GA* + 40 g Mischung A (Probe von oben) | 31,5/33,0 | 25 | kein Schaum |
| 6 | GA* + 40 g Mischung B (Probe von unten) | 33,0/34,5 | 30 | keinSchaum |
| 7 | GA* + 40 g Mischung B (Probe von oben) | 32,5/34,5 | 35 | kein Schaum |

* Die in der Mischung A bzw. B enthaltene Menge Wasser wurde beim Ansatz berücksichtigt.

** Spurzeit, ist die offene Zeit des verarbeitungsfertigen Materials in der es frei verfliesst.

Tabelle 2

| Probe-Nr. | Zusätze in % | | Ausbreit-mass | Rohdichte | Luftgehalt | Festigkeiten in N/mm² | |
|---|---|---|---|---|---|---|---|
| | NSF | erf. gem. Prod. entspr. Beisp. 1 | [cm] | v. Frischb. kg/dm³ | in % | (Druck) 2 Tage | 28 Tage |
| 1 | 0 | 0 | 40,5 | 2,29 | 2,0 | 14,7 | 34,9 |
| 2 | 0,3 | 0 | 56,0 | 28 | 3,1 | 14,0 | 31,1 |
| 3 | 0,3 | 0,01 | 56,5 | 2,31 | 0,8 | 16,8 | 35,9 |
| 4 | 0,3 | 0,003 | 56,0 | 2,31 | 1,0 | 15,5 | 36,3 |
| 5 | 0,3 | 0,001 | 55,5 | 2,31 | 1,5 | 16,2 | 35,4 |
| 6 | 0,3 | 0,0003 | 56,0 | 2,31 | 1,7 | 14,3 | 34,3 |

Beispiele 5–9

9,7 Teile des in Beispiel 1b beschriebenen neutralisierten, 100%igen Emulgatorharzes, 7,3 Teile der in Tabelle 3 aufgeführten Emulgatoren, 20,6 Teile $H_2O$ werden bei Raumtemperatur verrührt und danach 50 Teile Tributylphosphat eingerührt. Dann verdünnt man mit 10,6 Teilen $H_2O$ und rührt ca. 1 Stunde bei Raumtemperatur. Die Eigenschaften der entstehenden Dispersionen sind aufgeführt. Sie sind alle ohne Absetzen lagerfähig.

Tabelle 3

| Beispiel Nr. | Emulgator | Dispersion |
|---|---|---|
| 5 | 2,8 Mol Styrol addiert an 1 Mol Phenol + 15 Mol Ethylenoxid | niederviskos, homogen |
| 6 | 1 Mol Nonylphenol + 7 Mol Ethylenoxid | niederviskos, milchig |
| 7 | 1 Mol Nonylphenol + 10 Mol Ethylenoxid | mittelviskos, milchig |
| 8 | 1 Mol Nonylphenol + 30 Mol Ethylenoxid | pastös-fliessfähig gut verdünnbar |
| 9 | 1 Mol Rizinusöl + 50 Mol Ethylenoxid | pastös; bei Zusatz von 30 Teilen $H_2O$ niedrigviskos |

**Patentansprüche**

1. Emulgatorsystem, enthaltend einen nichtionischen Emulgator mit einem HLB-Wert von 10 bis 20 und ein polyethermodifiziertes Polyester-Emulgatorharz, das 5 bis 50 Gew.-%, bezogen auf das Emulgatorharz, Polyalkylenglykolreste enthält.

2. Emulgatorsystem nach Anspruch 1, dadurch gekennzeichnet, dass der nichtionische Emulgator eine Verbindung der Formel

$$R^1-(OCH_2-CH_2)_n-OH$$

worin

$R^1$ einen Alkylrest mit 12 bis 20 Kohlenstoffatomen oder den Rest

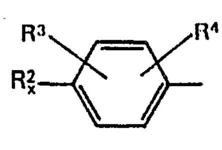

bedeutet, worin

$R^2$ einen Alkylrest mit 4 bis 20 Kohlenstoffatomen oder den Rest

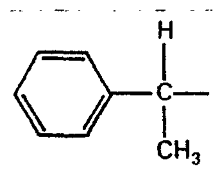

bedeutet,

$R^3$ Wasserstoff, Methyl oder Phenyl bedeutet,
$R^4$ Wasserstoff oder $C_1$–$C_{10}$-Alkyl bedeutet und
n eine ganze Zahl von 10 bis 40 ist,
x eine Zahl zwischen 2,0 und 3,5 ist.,
darstellt.

3. Emulgatorsystem nach Anspruch 1, dadurch gekennzeichnet, dass der nichtionische Emulgator ein hydroxyliertes Triglycerid darstellt.

4. Emulgatorsystem nach den Ansprüchen 1 bis 3, dadurch gekennzeichnet, dass das polyethermodifizierte Polyester-Emulgatorharz über Urethangruppen mit den Polyalkylenglykolresten verbunden ist.

5. Emulgatorsystem nach den Ansprüchen 1 bis 4, dadurch gekennzeichnet, dass es in Mischung mit einem Phosphorsäureester eingesetzt wird.

6. Emulgatorsystem nach den Ansprüchen 1 bis 5, dadurch gekennzeichnet, dass 5 bis 30 Gew.-Teile des nichtionischen Emulgators und 10 bis 40 Gew.-Teile des polyethermodifizierten Polyester-Emulgatorharzes bezogen auf 100 Gew.-Teile des Phosphorsäureesters eingesetzt werden.

7. Verwendung des Emulgatorsystems nach den Ansprüchen 1 bis 6 in wässriger Phase als Entschäumungs- und Schaumverhütungsmittel.

8. Verwendung des Emulgatorsystems nach den Ansprüchen 1 bis 6 als Dispergier- und Schaumverhütungsmittel in Bauwerkstoffen.

**Claims**

1. An emulsifier system containing a non-ionic emulsifier having an HLB-value of 10 to 20 and a polyether-modified polyester emulsifier resin which contains 5 to 50% by weight, based on the emulsifier resin, of polyalkylene glycol residues.

2. An emulsifier system according to Claim 1, characterised in that the non-ionic emulsifier is a compound of the formula

$R^1-(OCH_2-CH_2)_n-OH$

wherein

$R^1$ denotes an alkyl radical with 12 to 20 carbon atoms or the radical

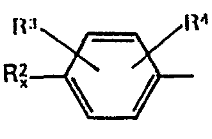

wherein

$R^2$ denotes an alkyl radical with 4 to 20 carbon atoms or the radical

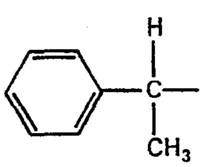

$R^3$ denotes hydrogen, methyl or phenyl,

$R^4$ denotes hydrogen or $C_1-C_{10}$-alkyl and

n is an integer of 10 to 40 and

x is a number between 2.0 and 3.5.

3. An emulsifier system according to Claim 1, characterised in that the non-ionic emulsifier is a hydroxylated triglyceride.

4. An emulsifier system according to Claims 1 to 3, characterised in that the polyether-modified polyester emulsifier resin is attached to the polyalkylene glycol residues through urethane groups.

5. An emulsifier system according to Claims 1 to 4, characterised in that it is used in admixture with a phosphoric acid ester.

6. An emulsifier system according to Claims 1 to 5, characterised in that 5 to 30 parts by weight of the non-ionic emulsifier and 10 to 40 parts by weight of the polyether-modified polyester emulsifier resin, based on 100 parts by weight of the phosphoric acid ester, are used.

7. The use of the emulsifier system according to Claims 1 to 6 in the aqueous phase as a defoaming and anti-foaming agent.

8. The use of the emulsifier system according to Claims 1 to 6 as a dispersant and anti-foaming agent in building materials.

**Revendications**

1. Système émulsionnant, contenant un émulsionnant non ionique ayant une valeur HLB de 10 à 20 et une résine émulsionnante du type d'un polyester modifié par un polyéther, qui contient 5 à 50% en poids de restes polyalkylène-glycol, par rapport à la résine émulsionnante.

2. Système émulsionnant suivant la revendication 1, caractérisé en ce que l'émulsionnant non ionique est un composé de formule:

$R^1-(OCH_2-CH_2)_n-OH$

dans laquelle:

$R^1$ est un reste alkyle ayant 12 à 20 atomes de carbone ou le reste:

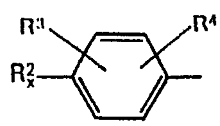

où

$R^2$ est un reste alkyle ayant 4 à 20 atomes de carbone ou le reste:

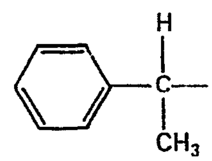

$R^3$ est l'hydrogène, le groupe méthyle ou le groupe phényle,

$R^4$ est l'hydrogène ou un groupe alkyle en $C_1$ à $C_{10}$ et

n est un nombre entier de 10 à 40,

x est un nombre compris entre 2,0 et 3,5.

3. Système émulsionnant suivant la revendication 1, caractérisé en ce que l'émulsionnant non ionique est un triglycéride hydroxylé.

4. Système émulsionnant suivant les revendications 1 à 3, caractérisé en ce que la résine émulsionnante du type polyester modifié par un polyéther est liée par l'intermédiaire de groupes uréthanne avec les restes polyalkylène-glycol.

5. Système émulsionnant suivant les revendications 1 à 4, caractérisé en ce qu'il est utilisé en mélange avec un ester d'acide phosphorique.

6. Système émulsionnant suivant les revendications 1 à 5, caractérisé en ce qu'on utilise 5 à 30 parties en poids de l'émulsionnant non ionique et 10 à 40 parties en poids de la résine émulsionnante du type polyester modifié par un polyéther, par rapport à 100 parties en poids de l'ester d'acide phosphorique.

7. Utilisation du système émulsionnant suivant les revendications 1 à 6, en phase aqueuse comme agent suppresseur de mousse et agent anti-mousse.

8. Utilisation du système émulsionnant suivant les revendications 1 à 6, comme agent dispersant et agent anti-mousse dans des matériaux de construction.